# FASCICULE DE BREVET EUROPEEN

(11) **EP 4 260 688 B1**
(45) Date de publication et mention de la délivrance du brevet: **08.07.2026**
(21) Numéro de dépôt: 23167601.6
(22) Date de dépôt: 12.04.2023
(51) Int. Cl.: A01K 1/00

(54) **SÉPARATEUR POUR UN BÂTIMENT D' ÉLEVAGE, EN PARTICULIER DE BOVINS**
SEPARATOR FÜR EIN VIEHZUCHTGEBÄUDE, INSBESONDERE FÜR RINDER
SEPARATOR FOR A LIVESTOCK BUILDING, IN PARTICULAR FOR CATTLE

(30) Priorité: 14.04.2022 FR 2203445
(43) Date de publication de la demande: 18.10.2023
(73) Titulaire: Group Elastoteck, 44390 Nort sur Erdre (FR)
(72) Inventeur: BIORET, Jean-Vincent, 44390 PETIT MARS (FR)
(74) Mandataire: Jacobacci & Partners France

(56) Documents cités:
- DE-U1- 202007 008 820
- GB-A- 2 492 219

## Description

### Domaine technique de l'invention

La présente invention concerne le domaine technique de l'élevage.

Elle concerne en particulier les séparateurs pour un bâtiment d'élevage, en particulier de bovins.

### Etat de la technique

Dans un bâtiment d'élevage, en particulier de bovins, il est utile d'installer des séparateurs pour délimiter la place disponible pour chaque animal et pour diminuer la pression des animaux dominants à l'auge.

De tels séparateurs sont généralement installés sur les barrières à cornadis. Ils peuvent également être intéressants le long des espaces de repos, notamment des logettes.

Toutefois, en pratique, la structure de ces séparateurs n'est pas toujours optimale, avec des risques de blessures pour les animaux ou une contention trop faible pour un bon positionnement et donc une bonne hygiène.

Pour limiter ce risque, il existe des séparateurs flexibles qui sont réalisés en matériau souple, voir par exemple GB2492219A et DE202007008820U1.

Mais les séparateurs flexibles actuels ne sont pas encore entièrement satisfaisants sur le plan de fabrication et de l'installation.

En outre, de manière générale, la largeur entre deux rangées de séparateurs (en vis-à-vis) peut être trop étroite pour la circulation d'un engin. Or, une telle voie de circulation est particulièrement intéressante, par exemple pour la prise en charge d'un animal souffrant.

### Présentation de l'invention

Afin de remédier à l'inconvénient précité de l'état de la technique, la présente invention propose selon la revendication 1 un séparateur pour un bâtiment d'élevage, en particulier de bovins destiné à être solidarisé avec une structure de réception, par exemple une barrière à cornadis.

Ce séparateur comprend :
- une partie avant, rigide, comprenant un organe tubulaire métallique,
   lequel organe tubulaire métallique comporte au moins une extrémité qui est équipée de moyens de solidarisation à ladite structure de réception, et
- une partie arrière, flexible, comprenant au moins un organe longitudinal flexible.

Et selon l'invention, l'organe tubulaire métallique comporte au moins un conduit de réception, femelle, qui comporte une extrémité arrière munie d'une ouverture s'ouvrant à l'opposé des moyens de solidarisation.

Et ledit au moins un organe longitudinal flexible comporte :
- un tronçon avant, mâle, qui est introduit dans ledit moins un conduit de réception, au travers de ladite ouverture, avantageusement de manière amovible, et
- un tronçon arrière, libre, formant ladite partie arrière.

La présente invention est ainsi intéressante en ce qu'elle permet d'élargir, de manière simple et efficace, la largeur entre deux rangées de séparateurs (en vis-à-vis) par un démontage simple et rapide de la partie arrière des séparateurs.

D'autres caractéristiques non limitatives et avantageuses du produit conforme à l'invention, prises individuellement ou selon toutes les combinaisons techniquement possibles, sont les suivantes :
- la partie avant présente une cote horizontale allant de 20 à 50 cm, et la partie arrière présente une cote horizontale allant de 50 à 150 cm ;
- l'organe tubulaire métallique comprend au moins trois tronçons : un tronçon montant, destiné à venir en regard et à distance de la structure de réception, et deux tronçons de liaison, inférieur et supérieur, raccordés au tronçon montant et portant lesdits moyens de solidarisation à ladite structure de réception ; ledit au moins un conduit de réception s'étend avantageusement sur au moins une partie de la longueur de l'un au moins desdits deux tronçons de liaison ; de préférence encore, l'ouverture dudit au moins un conduit de réception est ménagée à la jonction entre ledit conduit de réception et ledit tronçon montant ; ledit au moins un conduit de réception s'étend avantageusement sur au moins une partie de la longueur dudit tronçon de liaison inférieur, et ledit au moins un conduit de réception dudit organe tubulaire métallique et ledit au moins un organe longitudinal flexible définissent un angle allant de 1° à 50° par rapport à un plan horizontal, avec une pente croissante dans le sens avant vers arrière ;
- ledit au moins un organe longitudinal flexible est rectiligne ;
- ledit au moins un conduit de réception dudit organe tubulaire métallique et ledit au moins un tronçon avant dudit au moins un organe longitudinal flexible sont rectilignes ;
- la section intérieure dudit au moins un conduit de réception dudit organe tubulaire métallique correspond, au jeu près, à la section extérieure dudit au moins un tronçon avant dudit au moins un organe longitudinal flexible ;
- l'organe longitudinal flexible consiste en un organe tubulaire plastique, dont une extrémité arrière libre comporte avantageusement un élément de protection, avantageusement une pièce sphérique ;
- le tronçon arrière s'étend en porte-à-faux, depuis l'organe tubulaire métallique.

La présente invention concerne encore selon la revendication 12 le système de séparation pour un bâtiment d'élevage, en particulier de bovins, destiné à être solidarisé avec une structure de réception, par exemple une barrière à cornadis.

Le système de séparation comprend :
- plusieurs séparateurs selon l'invention,
   et éventuellement
- une barre longitudinale rapportée, destinée à être solidarisée avec lesdits séparateurs juxtaposés, et/ou
- des moyens de pulvérisation, pour le rafraichissement des animaux, avantageusement portés par ladite barre longitudinale rapportée.

La présente invention concerne également selon la revendication 13 un bâtiment d'élevage équipé d'un système de séparation selon l'invention, rapporté sur une structure de réception, par exemple une barrière à cornadis.

Bien entendu, les différentes caractéristiques, variantes et formes de réalisation de l'invention peuvent être associées les unes avec les autres selon diverses combinaisons dans la mesure où elles ne sont pas incompatibles ou exclusives les unes des autres.

### Description détaillée de l'invention

De plus, diverses autres caractéristiques de l'invention ressortent de la description annexée effectuée en référence aux dessins qui illustrent des formes, non limitatives, de réalisation de l'invention et où :
[Fig. 1] est une vue schématique, de côté, d'un premier séparateur selon l'invention ;
[Fig. 2] est une vue schématique, de côté, d'un second séparateur selon l'invention.

Il est à noter que, sur ces figures, les éléments structurels et/ou fonctionnels communs aux différentes variantes peuvent présenter les mêmes références.

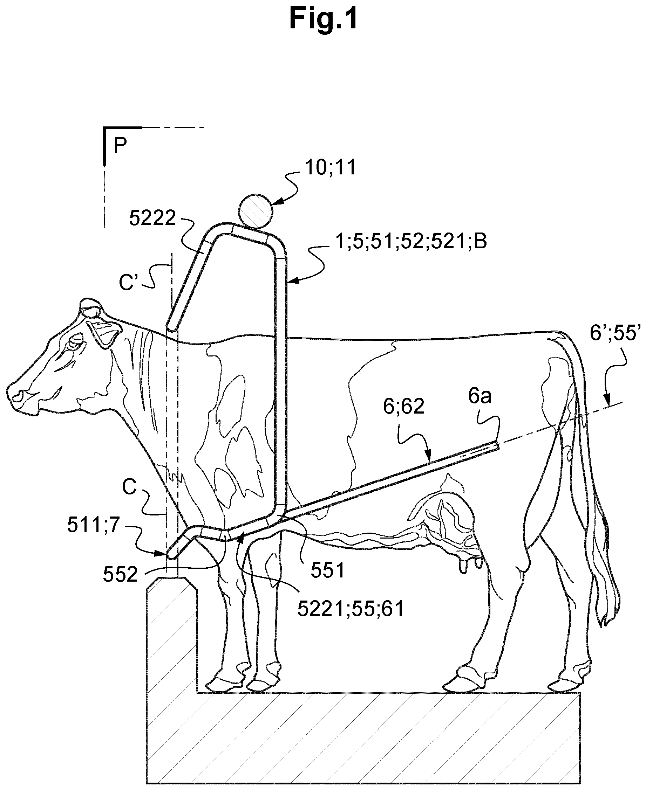

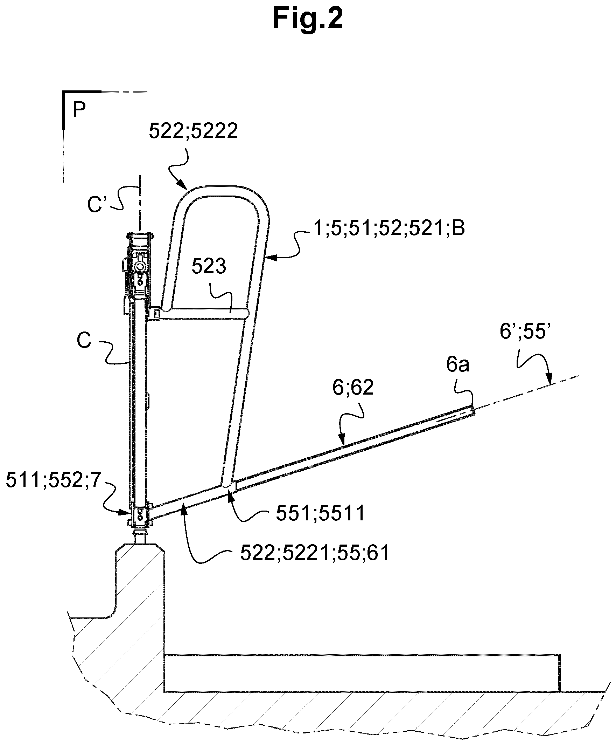

La présente invention, illustrée sur les figures 1 et 2, concerne un séparateur 1 pour un bâtiment d'élevage B, en particulier de bovins.

Le séparateur 1 est destiné à être solidarisé avec une structure de réception C (représentée très schématiquement sur les figures), par exemple une barrière à cornadis ou au sein de logettes (non représentés).

Un tel séparateur 1 est en particulier utile pour délimiter la place disponible pour chaque animal (par exemple des bovins, et en particulier des vaches laitières).

Au niveau d'une barrière à cornadis C, le séparateur 1, dit encore « séparateur de cornadis », est en particulier utile pour délimiter la place disponible pour chaque animal (par exemple des bovins, et en particulier des vaches laitières) au sein d'une marche d'alimentation M.

Dans ce cas, le séparateur 1 est destiné à être solidarisé avec la barrière à cornadis C, avantageusement classique en soi. Une telle barrière à cornadis C comprend deux barres longitudinales (l'une inférieure et l'autre supérieure), horizontales, reliées par des montants verticaux. Des couples de montants délimitent, avec les deux barres longitudinales, une ouverture (adaptée au passage de la tête d'un animal) qui est équipée d'une barre de contention oscillante.

De manière générale, selon l'invention, le séparateur 1 comprend deux parties :
- une partie avant 5, rigide, avantageusement destinée à s'étendre au niveau de la tête et des épaules de l'animal,
- une partie arrière 6, flexible, avantageusement destinée à s'étendre au niveau des flans de l'animal, comprenant (voire consistant en) au moins un organe longitudinal flexible 6 (désigné par le même repère dans un souci de simplicité).

La partie avant 5 et la partie arrière 6 s'étendent avantageusement dans un même plan général P, de préférence vertical et perpendiculaire à un plan longitudinal C' de la structure de réception C.

En ce sens, la partie avant 5 et la partie arrière 6 présentent avantageusement des cotes particulières (mesurées dans le plan général P) :
- la partie avant 5 présente une cote horizontale allant de 20 à 50 cm (perpendiculairement au plan longitudinal C' de la structure de réception C, correspondant avantageusement à l'entraxe entre un tronçon montant 521 et les moyens de solidarisation 7, décrits ci-après), et
- la partie arrière 6 présente une cote horizontale allant de 50 à 150 cm (perpendiculairement au plan longitudinal C' de la structure de réception C, correspondant avantageusement à l'entraxe entre le tronçon montant 521 de la partie avant 5 et une extrémité arrière 6a de la partie arrière 6, libre, décrits ci-après).

De manière générale, la partie avant 5 s'étend avantageusement en porte-à-faux depuis la structure de réception C ; et la partie arrière 6 s'étend avantageusement en porte-à-faux depuis la partie avant 5.

### Partie avant

La partie avant 5, rigide, comprend un organe tubulaire métallique 51.

Cet organe tubulaire métallique 51 comporte ici deux extrémités 511 qui sont équipées de moyens de solidarisation 7 pour la fixation à la structure de réception C.

L'organe tubulaire métallique 51 présente avantageusement les cotes suivantes, pouvant être prises en combinaison ou indépendamment les unes des autres :
- un diamètre allant de 40 à 70 mm, et
- une épaisseur allant de 2 à 5 mm.

Selon l'invention, ledit organe tubulaire métallique 51 comporte au moins un conduit de réception 55, femelle (formant avantageusement un fourreau), dans lequel la partie arrière 6 est destinée à venir se loger.

Pour cela, ledit au moins un conduit de réception 55 comporte ici deux extrémités :
- une extrémité arrière 551 munie d'une ouverture 5511 s'ouvrant à l'opposé des moyens de solidarisation 7 (vers l'arrière), pour l'insertion de la partie arrière 6, et
- une extrémité avant 552, servant avantageusement de butée de fin de course pour ladite partie arrière 6.

La longueur dudit au moins un conduit de réception 55 (distance entre l'extrémité arrière 551 et l'extrémité avant 552) est avantageusement de 150 à 500 mm.

De manière générale, l'organe tubulaire métallique 51 comprend avantageusement au moins trois tronçons 52 :
- un tronçon montant 521 (arrière), destiné à venir en regard et à distance de la structure de réception C, et
- deux tronçons de liaison 522 (avant), raccordés au tronçon montant 521 et portant les moyens de solidarisation 7 à la structure de réception C.

Pour cela, l'organe tubulaire métallique 51 consiste avantageusement en un organe tubulaire métallique 51 qui est mis en forme par cintrage.

Les tronçons de liaison 522 comprennent avantageusement :
- un tronçon de liaison inférieur 5221, avantageusement incliné (ascendant de l'avant vers l'arrière), et
- un tronçon de liaison supérieur 5222, avantageusement incliné (ascendant de l'avant vers l'arrière).

En particulier, le tronçon montant 521 s'étend avantageusement verticalement.

Ce tronçon montant 521 s'étend par exemple sur une hauteur allant de 800 à 1 800 mm.

Selon le mode de réalisation illustré sur la figure 2, l'organe tubulaire métallique 51 comporte encore une traverse 523 qui raccorde le tronçon de liaison supérieur 5222 et le tronçon montant 521.

Cette traverse 523 est destinée à renforcer l'organe tubulaire métallique 51.

Chaque tronçon de liaison 522 comporte avantageusement, à l'opposé du tronçon montant 521, l'une des deux extrémités 511 qui sont équipées de moyens de solidarisation 7.

Selon le mode de réalisation illustré sur la figure 2, les moyens de solidarisation 7 sont portés au niveau de la jonction entre la traverse 523 et le tronçon de liaison supérieur 5222.

Les moyens de solidarisation 7 sont avantageusement choisis parmi les moyens de liaison mécaniques adaptés à une solidarisation avec la structure de réception C, par exemple des colliers venant autour des barres longitudinales ou des montants verticaux.

Et, selon l'invention, ledit au moins un conduit de réception 55 s'étend sur au moins une partie de la longueur de l'organe tubulaire métallique 51, et de préférence de l'un au moins desdits trois tronçons 521, 522, de préférence encore l'un au moins desdits deux tronçons de liaison 522.

De préférence, ledit au moins un conduit de réception 55 est constitutif dudit organe tubulaire métallique 51. Ledit au moins un conduit de réception 55 forme alors au moins une partie de la longueur de l'organe tubulaire métallique 51.

De préférence, ledit au moins un conduit de réception 55 s'étend alors sur au moins une partie du tronçon de liaison inférieur 5221.

L'ouverture 5511 dudit conduit de réception 55 est ménagée avantageusement à la jonction entre ledit conduit de réception 55 et ledit tronçon montant 521.

De manière générale, l'orientation dudit au moins un conduit de réception 55 définit l'orientation dudit au moins un organe longitudinal flexible 6.

En effet, ledit au moins un organe longitudinal flexible 6 et ledit au moins un conduit de réception 55 dudit organe tubulaire métallique 51 définissent des axes longitudinaux 6',55' qui s'étendent avantageusement coaxialement l'un par rapport à l'autre.

Les axes longitudinaux 6', 55' s'étendent avantageusement dans le plan général P.

Ledit au moins un conduit de réception 55 dudit organe tubulaire métallique 51 et ledit au moins un organe longitudinal flexible 6 définissent un angle allant de 1° à 50° par rapport à un plan horizontal (correspondant encore à l'angle des axes longitudinaux 6', 55' par rapport à l'horizontal), avec une pente croissante dans le sens avant vers arrière.

### Partie arrière

La partie arrière 6, flexible, comprend (voire consiste en) au moins un organe longitudinal flexible 6 (désigné par le même repère dans un souci de simplicité).

Par « organe longitudinal », on entend avantageusement une pièce ayant la forme générale d'une barre.

Par « organe longitudinal flexible », on entend en particulier un organe longitudinal qui est apte, d'une part, à être déformé par l'animal venant s'appuyer sur la partie arrière 6 et, d'autre part, à reprendre totalement sa forme après l'arrêt de l'appui exercé par l'animal.

Chaque organe longitudinal flexible 6 est avantageusement rectiligne, au repos.

Un organe longitudinal flexible 6 est par exemple réalisé dans un matériau plastique, choisi par exemple parmi PEHD, PP, avantageusement tubulaire.

Une extrémité arrière 6a, libre, de cet organe longitudinal flexible 6 comporte avantageusement un élément de protection, avantageusement une pièce sphérique.

L'organe longitudinal flexible 6 présente avantageusement les cotes suivantes, pouvant être prises en combinaison ou indépendamment les unes des autres :
- une longueur allant de 200 à 2 000 mm,
- un diamètre allant de 20 à 70 mm,
- une épaisseur allant de 5 à 20 mm.

De manière générale, ledit au moins un organe longitudinal flexible 6 comporte :
- un tronçon avant 61, mâle, qui est introduit dans ledit moins un conduit de réception 55, au travers de ladite ouverture 5511, avantageusement de manière amovible, et
- un tronçon arrière 62, libre, formant ladite partie arrière 6.

De préférence, le tronçon avant 61, mâle, est introduit dans ledit moins un conduit de réception 55, au travers de ladite ouverture 5511, sans moyen de verrouillage en translation.

Le tronçon arrière 62 s'étend en porte-à-faux, depuis l'organe tubulaire métallique 51.

De préférence, ledit au moins un tronçon avant 61 dudit au moins un organe longitudinal flexible 6, et ledit au moins un conduit de réception 55 dudit organe tubulaire métallique 51, sont rectilignes.

Encore de manière générale, la section intérieure dudit au moins un conduit de réception 55 dudit organe tubulaire métallique 51 correspond, au jeu près, à la section extérieure dudit au moins un tronçon avant 61 dudit au moins un organe longitudinal flexible 6.

### Système de séparation

En pratique, l'invention est mise en œuvre sous la forme d'un système de séparation qui comprend :
- plusieurs séparateurs 1 selon l'invention, avantageusement en bataille,
   et éventuellement
- une barre longitudinale rapportée 10, destinée à être solidarisée avec les séparateurs 1 juxtaposés, et/ou
- des moyens de pulvérisation 11, pour le rafraichissement des animaux, avantageusement portés par la barre longitudinale rapportée 10.

La barre longitudinale rapportée 10 est solidarisée ici avec la partie avant 5, de préférence au niveau de l'extrémité supérieure du tronçon montant 521.

Les moyens de pulvérisation 11 consistent par exemple en des buses connectées à un circuit d'alimentation hydrique.

Le bâtiment d'élevage B est ainsi équipé d'un système de séparation selon l'invention, rapporté sur une structure de réception C, par exemple une barrière à cornadis.

Si nécessaire, pour circuler avec un engin entre deux rangées de séparateurs 1, il est possible de démonter temporairement la partie arrière 6 de ces derniers.

L'engin peut alors circuler dans l'espace « élargi » qui est délimité par les parties avant 5 de ces deux rangées de séparateurs 1.

En fin d'intervention, les parties arrière 6 de ces deux rangées de séparateurs 1 peuvent être remises en place.

Bien entendu, diverses autres modifications peuvent être apportées à l'invention dans le cadre des revendications annexées.

## Revendications

1. Séparateur pour un bâtiment d'élevage, en particulier de bovins, destiné à être solidarisé avec une structure de réception, par exemple une barrière à cornadis,
lequel séparateur (1) comprend :
- une partie avant (5), rigide, comprenant un organe tubulaire métallique (51),
lequel organe tubulaire métallique (51) comporte au moins une extrémité (511) qui est équipée de moyens de solidarisation (7) à ladite structure de réception (C), et
- une partie arrière (6), flexible, comprenant au moins un organe longitudinal flexible (6), ledit organe tubulaire métallique (51) comportant au moins un conduit
de réception (55), femelle, qui comporte une extrémité arrière (551) munie d'une ouverture (5511) s'ouvrant à l'opposé des moyens de solidarisation (7), et
ledit au moins un organe longitudinal flexible (6) comportant
- un tronçon avant (61), mâle, qui est introduit dans ledit moins un conduit de réception (55), au travers de ladite ouverture (5511), avantageusement de manière amovible,
**caractérisé en ce que** ledit au moins un organe longitudinal flexible (6) comporte un tronçon arrière (62), libre, formant la partie arrière (6).

2. Séparateur pour un bâtiment d'élevage, selon la revendication 1, **caractérisé en ce que** la partie avant (5) présente une cote horizontale allant de 20 à 50 cm, et **en ce que** la partie arrière (6) présente une cote horizontale allant de 50 à 150 cm.

3. Séparateur pour un bâtiment d'élevage, selon l'une quelconque des revendications 1 ou 2, **caractérisé en ce que** l'organe tubulaire métallique (51) comprend au moins trois tronçons :
- un tronçon montant (521), destiné à venir en regard et à distance de la structure de réception (C), et
- deux tronçons de liaison (522), inférieur et supérieur, raccordés au tronçon montant (521) et portant lesdits moyens de solidarisation (7).

4. Séparateur pour un bâtiment d'élevage, selon la revendication 3, **caractérisé en ce que** ledit au moins un conduit de réception (55) s'étend sur au moins une partie de la longueur de l'un au moins desdits trois tronçons (521, 522), de préférence l'un au moins desdits deux tronçons de liaison (522).

5. Séparateur pour un bâtiment d'élevage, selon la revendication 4, **caractérisé en ce que** l'ouverture (5511) dudit au moins un conduit de réception (55) est ménagée à la jonction entre ledit conduit de réception (55) et ledit tronçon montant (521).

6. Séparateur pour un bâtiment d'élevage, selon l'une quelconque des revendications 4 ou 5, **caractérisé en ce que** ledit au moins un conduit de réception (55) s'étend sur au moins une partie de la longueur dudit tronçon de liaison inférieur (5221),
et **en ce que** ledit au moins un conduit de réception (55) dudit organe tubulaire métallique (51) et ledit au moins un organe longitudinal flexible (6) définissent un angle allant de 1° à 50° par rapport à un plan horizontal, avec une pente croissante dans le sens avant vers arrière.

7. Séparateur pour un bâtiment d'élevage, selon l'une quelconque des revendications 1 à 6, **caractérisé en ce que** ledit au moins un organe longitudinal flexible (6) est rectiligne.

8. Séparateur pour un bâtiment d'élevage, selon l'une quelconque des revendications 1 à 7, **caractérisé en ce que** ledit au moins un conduit de réception (55) dudit organe tubulaire métallique (51) et ledit au moins un tronçon avant (61) dudit au moins un organe longitudinal flexible (6) sont rectilignes.

9. Séparateur pour un bâtiment d'élevage, selon l'une quelconque des revendications 1 à 8, **caractérisé en ce que** la section intérieure dudit au moins un conduit de réception (55) dudit organe tubulaire métallique (51) correspond, au jeu près, à la section extérieure dudit au moins un tronçon avant (61) dudit au moins un organe longitudinal flexible (6).

10. Séparateur pour un bâtiment d'élevage, selon l'une quelconque des revendications 1 à 9, **caractérisé en ce que** l'organe longitudinal flexible (6) consiste en un organe tubulaire plastique, dont une extrémité arrière (551) libre comporte avantageusement un élément de protection, avantageusement une pièce sphérique.

11. Séparateur pour un bâtiment d'élevage, selon l'une quelconque des revendications 1 à 10, **caractérisé en ce que** le tronçon arrière (62) de l'organe longitudinal flexible (6) s'étend en porte-à-faux, depuis l'organe tubulaire métallique (51).

12. Système de séparation pour un bâtiment d'élevage, en particulier de bovins, destiné à être solidarisé avec une structure de réception, par exemple une barrière à cornadis,
lequel système de séparation comprend :
- plusieurs séparateurs (1) selon l'une quelconque des revendications 1 à 11,
et éventuellement
- une barre longitudinale (10) rapportée, destinée à être solidarisée avec lesdits séparateurs (1) juxtaposés, et/ou
- des moyens de pulvérisation (11), pour le rafraichissement des animaux, avantageusement portés par ladite barre longitudinale (10) rapportée.

13. Bâtiment d'élevage équipé d'un système de séparation selon la revendication 12, rapporté sur une structure de réception (C), par exemple une barrière à cornadis.

## Patentansprüche

1. Separator für ein Viehzuchtgebäude, insbesondere für Rinder, der dazu bestimmt ist, mit einer Aufnahmestruktur, zum Beispiel einer Gatterbarriere, fest verbunden zu werden,
wobei der Separator (1)
- einen steifen vorderen Teil (5) mit einem metallenen rohrförmigen Organ (51), wobei das metallene rohrförmige Organ (51) mindestens ein Ende (511) aufweist, das mit Mitteln (7) zum Befestigen an der Aufnahmestruktur (C) ausgestattet ist, und
- einen flexiblen rückwärtigen Teil (6) mit mindestens einem flexiblen Längsorgan (6),
wobei das metallene rohrförmige Organ (51) mindestens ein Aufnahmerohr (55) aufweist, das ein rückwärtiges Ende (551) mit einer von den Befestigungsmitteln (7) abgewandten Öffnung (5511) aufweist, und
wobei das mindestens eine flexible Längsorgan (6)
- einen einsteckbaren vorderen Abschnitt (61) aufweist, der durch die besagte Öffnung (5511) vorteilhafterweise herausnehmbar in das mindestens eine Aufnahmerohr (55) eingesteckt wird,
**dadurch gekennzeichnet, daß** das mindestens eine flexible Längsorgan (6) einen den rückwärtigen Teil (6) bildenden freien rückwärtigen Abschnitt (62) aufweist.

2. Separator für ein Viehzuchtgebäude gemäß Anspruch 1, **dadurch gekennzeichnet, daß** der vordere Teil (5) eine horizontale Abmessung von 20 bis 50 cm aufweist und daß der rückwärtige Teil (6) eine horizontale Abmessung von 50 bis 150 cm aufweist.

3. Separator für ein Viehzuchtgebäude gemäß einem der Ansprüche 1 oder 2, **dadurch gekennzeichnet, daß** das metallene rohrförmige Organ (51) mindestens drei Abschnitte aufweist:
- einen aufsteigenden Abschnitt (521), der dazu bestimmt ist, gegenüber und in einem Abstand zur Aufnahmestruktur (C) zu liegen, und
- zwei Verbindungsabschnitte (522), einen unteren und einen oberen, die mit dem aufsteigenden Abschnitt (521) verbunden sind und die Befestigungsmittel (7) tragen.

4. Separator für ein Viehzuchtgebäude gemäß Anspruch 3, **dadurch gekennzeichnet, daß** sich das mindestens eine Aufnahmerohr (55) über mindestens einen Teil der Länge von mindestens einem der drei Abschnitte (521, 522), vorteilhafterweise von mindestens einem der beiden Verbindungsabschnitte (522), erstreckt.

5. Separator für ein Viehzuchtgebäude gemäß Anspruch 4, **dadurch gekennzeichnet, daß** die Öffnung (5511) des mindestens einen Aufnahmerohrs (55) an der Verbindungsstelle zwischen dem Aufnahmerohr (55) und dem besagten aufsteigenden Abschnitt (521) eingerichtet ist.

6. Separator für ein Viehzuchtgebäude gemäß einem der Ansprüche 4 oder 5, **dadurch gekennzeichnet, daß** sich das mindestens eine Aufnahmerohr (55) über mindestens einen Teil der Länge des unteren Verbindungsabschnitts (5221) erstreckt und daß das mindestens eine Aufnahmerohr (55) des metallenen rohrförmigen Organs (51) und das mindestens eine flexible Längsorgan (6) einen Winkel von 1° bis 50° gegenüber einer horizontalen Ebene mit einem zunehmenden Anstieg von vorne nach hinten definieren.

7. Separator für ein Viehzuchtgebäude gemäß einem der Ansprüche 1 bis 6, **dadurch gekennzeichnet, daß** das mindestens eine flexible Längsorgan (6) geradlinig ist.

8. Separator für ein Viehzuchtgebäude gemäß einem der Ansprüche 1 bis 7, **dadurch gekennzeichnet, daß** das mindestens eine Aufnahmerohr (55) des metallenen rohrförmigen Organs (51) und der mindestens eine vordere Abschnitt (61) des mindestens einen flexiblen Längsorgans (6) geradlinig sind.

9. Separator für ein Viehzuchtgebäude gemäß einem der Ansprüche 1 bis 8, **dadurch gekennzeichnet, daß** der Innendurchmesser des mindestens einen Aufnahmerohrs (522) des metallenen rohrförmigen Organs (51) bis auf ein Spiel dem Außendurchmesser des vorderen Abschnitts (61) des mindestens einen flexiblen Längsorgans (6) entspricht.

10. Separator für ein Viehzuchtgebäude gemäß einem der Ansprüche 1 bis 9, **dadurch gekennzeichnet, daß** das flexible Längsorgan (6) vorteilhafterweise aus einem rohrförmigen Plastikorgan besteht, von dem ein freies rückwärtiges Ende (6a) vorteilhafterweise ein Schutzelement, vorteilhafterweise ein kugelförmiges Stück, aufweist.

11. Separator für ein Viehzuchtgebäude gemäß einem der Ansprüche 1 bis 10, **dadurch gekennzeichnet, daß** sich der rückwärtige Abschnitt (62) des flexiblen Längsorgans (6) vom metallenen rohrförmigen Organ (51) aus freitragend erstreckt.

12. Trennsystem für ein Viehzuchtgebäude, insbesondere für Rinder, das dazu bestimmt ist, mit einer Aufnahmestruktur (C), und zwar einer Gatterbarriere, fest verbunden zu werden,
wobei das Trennsystem
- mehrere Separatoren gemäß einem der Ansprüche 1 bis 11 und eventuell
- eine angebaute Längsstange (10), die dazu bestimmt ist, mit den nebeneinander angeordneten Separatoren (1) fest verbunden zu werden, und/oder
- vorteilhafterweise von der angebauten Längsstange (10) getragene Sprühmittel (11) zum Erfrischen der Tiere
aufweist.

13. Zuchtgebäude, das mit einem Trennsystem gemäß Anspruch 12 versehen ist, das an eine Aufnahmestruktur (C), und zwar eine Gatterbarriere, angebaut ist.

## Claims

1. Separator for a building for livestock, in particular cattle, intended to be secured to a receiving structure, for example a feed fence type barrier,
wherein the separator (1) comprises:
- a rigid front portion (5) comprising a tubular metal member (51), which tubular metal member (51) includes at least one end (511) which is equipped with means for securing (7) to said receiving structure (C), and
- a flexible rear portion (6) comprising at least one flexible longitudinal member (6), said tubular metal member (51) including at least one female receiving duct (55), which includes a rear end (551) provided with an opening (5511) opening opposite the securing means (7), and said at least one flexible longitudinal member (6) including
- a male front section (61) which is introduced into said at least one receiving duct (55), through said opening (5511), advantageously removably, **characterised in that** said at least one flexible longitudinal member (6) comprises a free rear section (62) forming the rear portion (6).

2. Separator for a building for livestock according to claim 1, **characterised in that** the front portion (5) has a horizontal dimension ranging from 20 to 50 cm, and **in that** the rear portion (6) has a horizontal dimension ranging from 50 to 150 cm.

3. Separator for a building for livestock according to either claim 1 or 2, **characterised in that** the tubular metal member (51) comprises at least three sections:
- a rising section (521), intended to move opposite and remote from the receiving structure (C), and
- two lower and upper connecting sections (522) connected to the rising section (521) and carrying said securing means (7).

4. Separator for a building for livestock according to claim 3, **characterised in that** said at least one receiving duct (55) extends over at least some of the length of at least one of said three sections (521, 522), preferably at least one of said two connecting sections (522).

5. Separator for a building for livestock according to claim 4, **characterised in that** the opening (5511) of said at least one receiving duct (55) is provided at the junction between said receiving duct (55) and said rising section (521).

6. Separator for a building for livestock according to either claim 4 or 5, **characterised in that** said at least one receiving duct (55) extends over at least some of the length of said lower connecting section (5221), and **in that** said at least one receiving duct (55) of said tubular metal member (51) and said at least one flexible longitudinal member (6) define an angle ranging from 1° to 50° with respect to a horizontal plane, with an increasing slope in the direction from the front towards the rear.

7. Separator for a building for livestock according to any one of claims 1 to 6, **characterised in that** said at least one flexible longitudinal member (6) is rectilinear.

8. Separator for a building for livestock according to any one of claims 1 to 7, **characterised in that** said at least one receiving duct (55) of said tubular metal member (51) and said at least one front section (61) of said at least one flexible longitudinal member (6) are rectilinear.

9. Separator for a building for livestock according to any one of claims 1 to 8, **characterised in that** the inner section of said at least one receiving duct (55) of said tubular metal member (51) corresponds, to within clearance, to the outer section of said at least one front section (61) of said at least one flexible longitudinal member (6).

10. Separator for a building for livestock according to any one of claims 1 to 9, **characterised in that** the flexible longitudinal member (6) comprises a plastics tubular member, of which a free rear end (551) advantageously includes a protective element, advantageously a spherical piece.

11. Separator for a building for livestock according to any one of claims 1 to 10, **characterised in that** the rear section (62) of the flexible longitudinal member (6) extends in an overhanging manner, from the tubular metal member (51).

12. Separation system for a building for livestock, in particular cattle, intended to be secured to a receiving structure, for example a feed fence type barrier,
which separation system comprises:
- several separators (1) according to any one of claims 1 to 11, and optionally
- an attached longitudinal bar (10), intended to be secured to said mutually adjacent separators (1), and/or
- spraying means (11), for cooling the animals, advantageously carried by said attached longitudinal bar (10).

13. Building for livestock equipped with a separation system according to claim 12, attached to a receiving structure (C), for example a feed fence type barrier.
